# DEMANDE DE BREVET EUROPEEN

(11) **EP 1 160 419 A1**
(43) Date de publication de la demande: **05.12.2001**
(21) Numéro de dépôt: 00870118.7
(22) Date de dépôt: 31.05.2000
(51) Int. Cl.: F01D 25/20, F01D 15/08

(54) **Dispositif de lubrification pour moteur aéronautique**

(71) Demandeur: Techspace Aero S.A., 4041 Herstal (BE)
(72) Inventeur: Cornet, Albert, 4800 Verviers (BE)
(74) Mandataire: Van Malderen, Joelle

(57) **Abrégé**

La présente invention se rapporte à un dispositif de lubrification, comprenant au moins une pompe (1,15,17), pour un moteur aéronautique, de préférence un turboréacteur, comportant au moins un arbre moteur (2), ledit dispositif assurant la mise en pression d'huile prélevée dans un réservoir (3), la distribution de l'huile, via un circuit aval (5), vers des organes (6) dudit moteur ainsi que le retour de l'huile, via un circuit de récupération (7), vers le réservoir, après récupération de ladite huile à des points bas dudit moteur, caractérisé en ce que la vitesse de rotation de ladite pompe (1,15,17) est variable et réglable, indépendamment de la vitesse de rotation de l'arbre moteur (2).

## Description

### Objet de l'invention

La présente invention a pour objet un dispositif de lubrification pour moteur aéronautique.

### Etat de la technique

Il est connu que les moteurs aéronautiques sont lubrifiés par un ensemble de pompes assurant d'une part la mise en pression de l'huile prélevée dans le réservoir et fournie ensuite vers les organes moteurs à lubrifier, et d'autre part la récupération de l'huile récoltée aux points bas du moteur et renvoyée au réservoir. Ces pompes sont toutes soit entraînées par un même arbre en un « groupe de pompes », soit réparties individuellement dans le moteur.

Pour diverses raisons, ces pompes sont généralement de type volumétrique. Les types simples, à cylindrée fixe, tels que les pompes à engrenages, Gérotors® , à palettes, sont préférés pour des raisons de simplicité, fiabilité et légèreté.

Comme d'autres accessoires du moteur, ces pompes sont entraînées par l'arbre du corps haute pression du moteur au travers d'une chaîne cinématique plus ou moins complexe. La vitesse des pompes est donc directement proportionnelle à la vitesse de rotation de cet arbre.

Puisque la vitesse d'entraînement des pompes est donc à tout instant directement proportionnelle à la vitesse de rotation du moteur, et comme la cylindrée des pompes est fixe, le débit d'huile fourni n'est pas réglable en fonctionnement et n'est donc pas ajusté aux besoins réels de lubrification. Il ne dépend que de la performance de la pompe à la vitesse imposée par le moteur, dans les conditions imposées par l'environnement direct et les circuits amont et aval.

Le débit d'huile, et donc la pression, augmente avec la vitesse de rotation du moteur. Si la pression devient trop grande, des systèmes de sécurité, par exemple des clapets de surpression, interviennent pour laisser s'échapper l'huile excédentaire.

Certains constructeurs ajoutent des systèmes de régulation ou de limitation de pression dans le circuit aval. Ceux-ci cependant, de type passif, ne peuvent que stabiliser ou écrêter la pression de l'huile dans certains régimes.

Le débit de lubrification du moteur est donc peu ou pas contrôlé et essentiellement dépendant du régime de fonctionnement du moteur. Or, le besoin en huile du moteur est lié à plusieurs autres paramètres, hormis la vitesse de rotation de l'arbre. Ces paramètres sont notamment la pression et la température externes, qui dépendent elles-mêmes de l'altitude, la charge du moteur et les variations de régime, qui peuvent conduire à des transitoires thermiques importants.

Comme le besoin du moteur en huile durant le fonctionnement varie selon une loi différente de celle commandant l'évolution du débit effectif des pompes, on est amené à dimensionner celles-ci en fonction du cas de fonctionnement le plus défavorable. Il en résulte un surdimensionnement souvent important dans les autres cas de fonctionnement. Les conséquences en sont le surdimensionnement du circuit, de la pompe et de ses organes d'entraînement, une consommation énergétique inutile, de même que la présence dans le moteur d'une quantité d'huile excessive, néfaste au rendement des organes internes.

L'usage dans le circuit aval de systèmes de contrôle de débit n'éliminerait pas la dépense énergétique et le surdimensionnement des pompes, mais augmenterait le poids du système tout en dégradant sa fiabilité. De même, les pompes à cylindrée variable, trop lourdes, trop peu fiables et d'un rendement médiocre n'apportent pas une solution efficace.

### Buts de l'invention

La présente invention a pour but de proposer un dispositif de lubrification pour moteur aéronautique qui ne présente pas les inconvénients de l'état de la technique.

En particulier, l'invention a pour but de proposer un dispositif de lubrification permettant de satisfaire le mieux possible à tout moment le besoin réel en huile du moteur.

Un but complémentaire de l'invention est de fournir une solution permettant un allégement considérable de la chaîne cinématique par la suppression des organes d'entraînement de la pompe, la simplification du circuit de lubrification et des accessoires associés, par rapport à l'état de la technique.

Un but complémentaire de l'invention est de fournir une solution permettant d'utiliser une pompe hydrauliquement simple, légère et fiable.

Enfin, l'invention a pour but de proposer une solution moins coûteuse que celle de l'état de la technique.

### Principaux éléments caractéristiques de l'invention

La présente invention se rapporte à un dispositif de lubrification, comprenant au moins une pompe, pour un moteur aéronautique, de préférence un turboréacteur, comportant au moins un arbre, ledit dispositif assurant la mise en pression d'huile prélevée dans un réservoir, la distribution de l'huile, via un circuit aval, vers des organes dudit moteur ainsi que le retour de l'huile, via un circuit de récupération, vers le réservoir, après récupération de ladite huile à des points bas dudit moteur, caractérisé en ce que la vitesse de rotation de ladite pompe est variable et réglable, indépendamment de la vitesse de rotation de l'arbre moteur.

Avantageusement, ladite pompe fait partie d'un groupe motopompe à vitesse variable, de préférence placé directement sur le réservoir d'huile.

De préférence, la pompe du dispositif selon l'invention est actionnée par une source d'énergie qui peut être par exemple constituée d'une génératrice, de préférence accouplée au moteur aéronautique ou encore d'un système hydraulique ou pneumatique.

Avantageusement, le dispositif de lubrification comprend des moyens de contrôle de la vitesse de rotation de la pompe, ladite vitesse étant asservie à une loi prédéterminée indépendante de la vitesse de rotation de l'arbre moteur et qui est de préférence fonction des besoins en lubrification du moteur.

De manière particulièrement avantageuse, le dispositif comprend des moyens de régulation de la vitesse de la pompe suivant une logique en boucle ouverte, en boucle fermée ou basés sur la logique floue.

De préférence, la régulation est en outre basée sur des lois préétablies de besoin en huile en fonction des caractéristiques de vol, de fonctionnement du moteur aéronautique et des caractéristiques hydrauliques de la pompe.

La régulation de la vitesse en boucle ouverte est en outre avantageusement basée sur un ou plusieurs paramètres moteur tels que la pression, la température, la vitesse d'arbre et la charge mécanique.

La régulation de la vitesse en boucle fermée est en outre avantageusement basée sur une température, de préférence d'huile, mesurée en au moins un point du moteur.

La boucle fermée peut être réalisée en proportionnel direct ou en PID.

En outre, selon l'invention, lesdites pompes étant utilisées individuellement ou en groupe, le dispositif de lubrification peut comporter des moyens affectant chaque pompe ou groupe de pompes à au moins une tâche spécifique de lubrification, chaque pompe ou groupe de pompes étant régulé en fonction de ladite tâche spécifique, indépendamment les uns des autres.

Enfin, l'invention se rapporte à l'utilisation du dispositif décrit ci-dessus pour la lubrification d'un moteur aéronautique, de préférence un turboréacteur.

### Brève description des dessins

La figure 1 représente schématiquement un dispositif de lubrification pour moteur aéronautique selon l'état de la technique.

La figure 2 représente schématiquement un dispositif de lubrification pour moteur aéronautique selon une première forme d'exécution de la présente invention.

La figure 3 représente schématiquement un dispositif de lubrification pour moteur aéronautique selon une deuxième forme d'exécution de la présente invention.

La figure 4 représente schématiquement un dispositif de lubrification pour moteur aéronautique selon une troisième forme d'exécution de la présente invention.

### Description détaillée de l'invention et de plusieurs formes d'exécution préférées

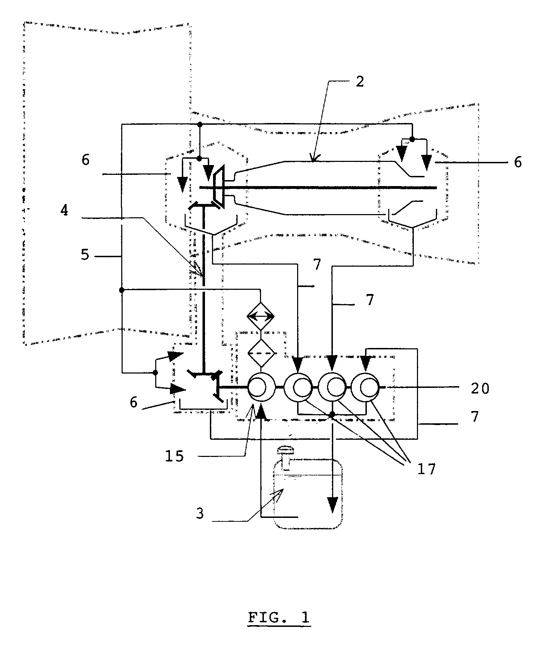

Selon l'état de la technique représenté schématiquement à la figure 1, un groupe de pompes de lubrification 15,17 est disposé sur un arbre unique 20. Celui-ci est entraîné par une chaîne cinématique 4, laquelle est à son tour entraînée par l'arbre haute pression 2 du moteur.

L'huile est d'une part prélevée dans le réservoir 3 et fournie par une (ou des) pompe(s) 15 aux différents organes à lubrifier 6, via un circuit aval 5, et d'autre part, récupérée aux points bas du moteur et renvoyée par une (ou des) pompe(s) 17 au réservoir 3, via un circuit de récupération 7.

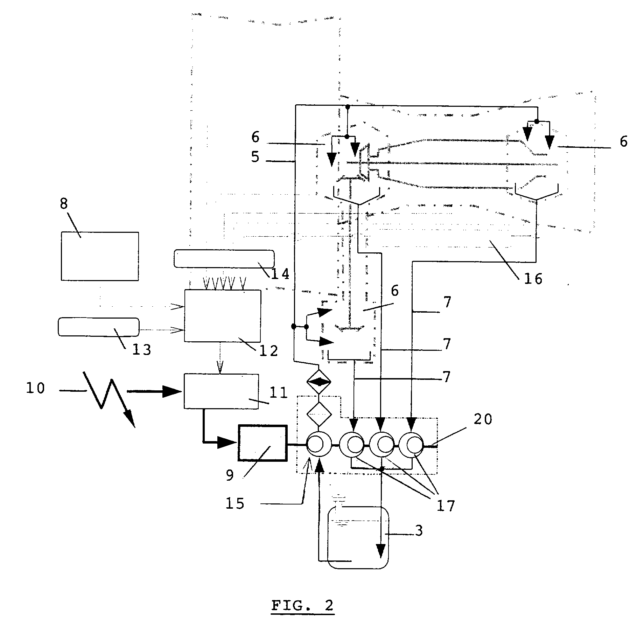

La figure 2 est un schéma de principe de contrôle de pompes de lubrification à entraînement indépendant, selon une forme d'exécution préférée de l'invention, où toutes les pompes sont regroupées sur un arbre unique 20.

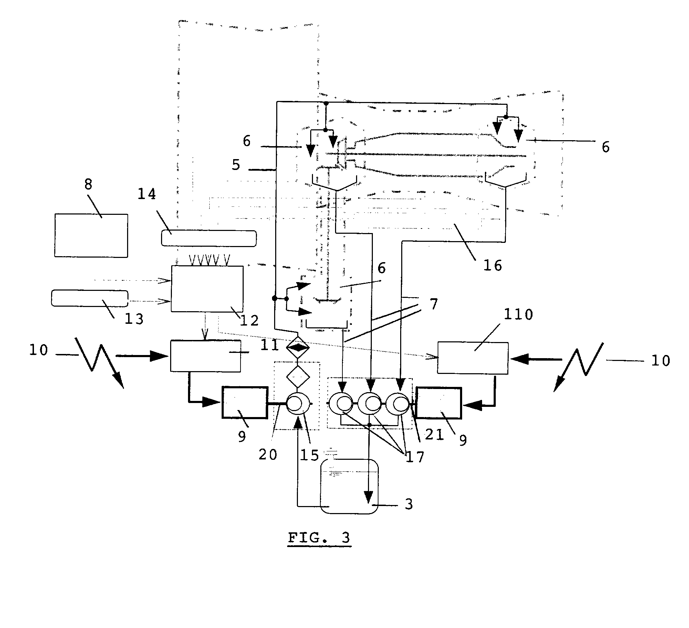

Selon une autre forme d'exécution particulière de l'invention représentée à la figure 3, le contrôle de la vitesse 11 de la pompe d'alimentation 15 est effectué séparément du contrôle de la vitesse commune 110 de toutes les pompes de récupération 17, les deux types de pompes se trouvant sur des arbres différents 20,21.

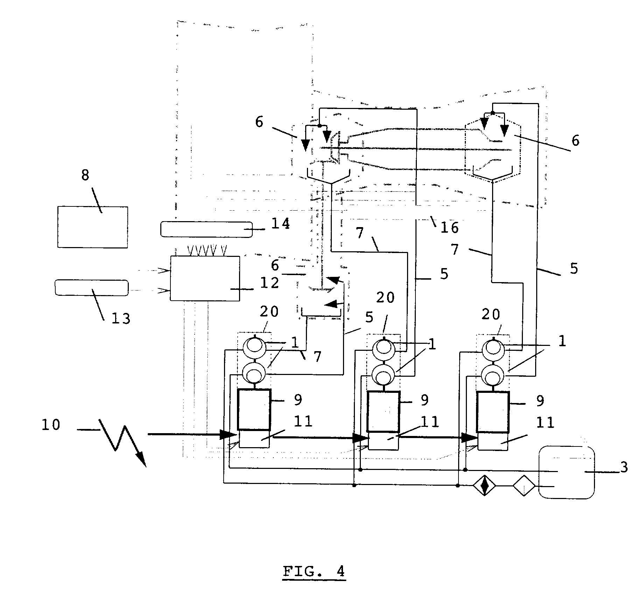

Enfin, la figure 4 présente une dernière forme d'exécution préférée de l'invention, dans laquelle on effectue le contrôle 11 de cellules indépendantes 1,9 d'alimentation et récupération pour chaque enceinte moteur 6.

De manière générale, on peut appliquer l'invention à un groupe de pompes « calées » sur un même arbre, ou encore individuellement à chaque pompe ou sous-groupe de pompes, entraînée(s) par un moteur et une loi individuels et localisés à l'endroit optimal.

Le principe à la base de l'invention est de disposer, par des moyens adéquats, à un endroit quelconque sur le moteur, par exemple directement sur le réservoir d'huile, un groupe motopompe 9,15,17 (ou 9,1) à vitesse variable. Ce groupe utilise de préférence l'énergie électrique fournie soit par une génératrice 10 accouplée au moteur de l'avion, soit toute autre source d'énergie électrique disponible sur l'avion (hydraulique, pneumatique, etc.).

La vitesse du (ou des) groupe(s) motopompe(s) est asservie selon une logique adéquate 11, d'un des types suivants :
- régulation en boucle totalement ouverte, basée sur des lois préétablies de besoin en huile moteur en fonction des conditions de vol et de fonctionnement. Les caractéristiques hydrauliques connues de la pompe sont intégrées. L'entrée est la configuration de vol et le système en déduit une vitesse optimale de rotation de la pompe. La consigne 12 de départ n'est pas réadaptée en fonction du résultat. Des effets de retard ou d'anticipation peuvent être intégrés pour gérer les transitoires thermiques ;
- régulation en boucle ouverte à partir de mesures de paramètres 14 recueillis sur le moteur et significatifs de la charge et des puissances dissipées par les organes à lubrifier (pression et température du moteur 16, vitesse d'arbre 13, éventuellement charge du moteur, etc.). La régulation 11,12 calcule le besoin en huile à partir de ces données et intègre la caractéristique de la pompe. Comme précédemment, l'asservissement peut intégrer des effets de retard ou d'anticipation ;
- régulation en boucle fermée sur la température de l'huile sortant du moteur, ou de celle d'organes à lubrifier, ou encore d'autres points du moteur. Cette boucle peut être réalisée en proportionnel direct, PID (proportionnel intégral différentiel) ou autre. Cette stratégie a l'avantage de compenser automatiquement jusqu'à un certain point l'usure ou une dégradation accidentelle de la pompe ;
- régulation en logique floue ou autoadaptative, conçue sur base de l'expérience acquise.

Les calculs de la vitesse de rotation de la pompe à réaliser et des fonctions d'asservissement 11,12 peuvent être entièrement exécutés par le calculateur central 8 du moteur (FADEC) ou par un calculateur propre à la pompe ou au dispositif de lubrification, ou encore répartis entre ces deux calculateurs.

L'invention présente un certain nombre d'avantages sur l'état de la technique. Le surcroît de masse engendré par le moteur à vitesse variable, de préférence mais pas nécessairement électrique, est largement compensé par l'allègement de la chaîne cinématique d'entraînement selon l'état de la technique, ainsi que l'allégement de tout le circuit et accessoires de lubrification rendu possible.

On peut également conserver une pompe hydrauliquement simple, légère et fiable. Le moteur d'entraînement de la pompe et son dispositif de contrôle peuvent donc être réalisés avec une masse inférieure et une fiabilité au moins égale à celles de la chaîne cinématique qu'ils remplacent.

De plus, la tendance actuelle est à l'accroissement des besoins en énergie électrique des moteurs et des avions futurs ainsi qu'à l'extension du contrôle informatique du moteur. On constate dès lors que l'essentiel des moyens matériels nécessaires à la fourniture de la puissance et des consignes de vitesse à la pompe sont déjà présents - ou le seront rapidement - sur les moteurs. Le surcroît en masse et en coût de la solution proposée est donc marginal pour ces équipements, alors qu'un gain important en masse et coût est par contre réalisé par la suppression d'organes mécaniques d'entraînement, l'allégement de la pompe elle-même et du circuit associé.

Le dispositif selon l'invention permet en outre, de par sa plus grande souplesse et sa consommation moindre en huile, d'améliorer le rendement total du moteur.

Enfin, l'invention permet des stratégies d'adaptation plus souples aux fonctionnements dégradés que dans les solutions de l'état de la technique, et donc une meilleure fiabilité.

## Revendications

1. Dispositif de lubrification, comprenant au moins une pompe (1,15,17), pour un moteur aéronautique, de préférence un turboréacteur, comportant au moins un arbre moteur (2), ledit dispositif assurant la mise en pression d'huile prélevée dans un réservoir (3), la distribution de l'huile, via un circuit aval (5), vers des organes (6) dudit moteur ainsi que le retour de l'huile, via un circuit de récupération (7), vers le réservoir, après récupération de ladite huile à des points bas dudit moteur, **caractérisé en ce que** la vitesse de rotation de ladite pompe (1,15,17) est variable et réglable, indépendamment de la vitesse de rotation de l'arbre moteur (2).

2. Dispositif selon la revendication 1, **caractérisé en ce que** ladite pompe fait partie d'un groupe motopompe (9,1,15,17) à vitesse variable.

3. Dispositif selon la revendication 1 ou 2, **caractérisé en ce que** la pompe ou la motopompe (9,1,15,17) est actionnable par une source d'énergie constituée d'une génératrice (10), de préférence accouplée au moteur aéronautique.

4. Dispositif selon la revendication 1 ou 2, **caractérisé en ce que** la pompe ou la motopompe (9,1,15,17) est actionnable par une source d'énergie constituée d'un système hydraulique ou pneumatique.

5. Dispositif selon l'une quelconque des revendications précédentes, **caractérisé en ce qu'**il comprend des moyens de contrôle (11) de la vitesse de rotation de la pompe ou de la motopompe (9,1,15,17), ladite vitesse étant asservie à une loi prédéterminée indépendante de la vitesse de rotation de l'arbre moteur (2) et qui est de préférence fonction des besoins en lubrification du moteur.

6. Dispositif selon la revendication 5, **caractérisé en ce qu'**il comprend des moyens de régulation (11,12) de la vitesse de la pompe ou de la motopompe (1,15,17) suivant une logique en boucle ouverte.

7. Dispositif selon la revendication 6, **caractérisé en ce que** la régulation (11,12) est en outre basée sur des lois préétablies de besoin en huile en fonction des caractéristiques de vol, de fonctionnement du moteur aéronautique et des caractéristiques hydrauliques de la pompe ou de la motopompe (9,1,15,17).

8. Dispositif selon la revendication 7, **caractérisée en ce que** la régulation (11,12) est en outre basée sur un ou plusieurs paramètres moteur (13,14,16) appartenant au groupe constitué par la pression, la température, la vitesse d'arbre et la charge mécanique.

9. Dispositif selon la revendication 5, **caractérisé en ce qu'**il comprend des moyens de régulation (11,12) de la vitesse de la pompe ou de la motopompe (9,1,15,17) suivant une logique en boucle fermée.

10. Dispositif selon la revendication 9, **caractérisé en ce que** la régulation en boucle fermée est effectuée sur une température, de préférence d'huile, mesurée en au moins un point du moteur.

11. Dispositif selon la revendication 9 ou 10, **caractérisé en ce que** ladite boucle est réalisée en proportionnel direct ou en PID.

12. Dispositif selon la revendication 5, **caractérisée en ce qu'**il comprend des moyens de régulation (11,12) de la vitesse de la pompe ou de la motopompe (9,1,15,17) basés sur la logique floue.

13. Dispositif selon l'une quelconque des revendications précédentes, **caractérisé en ce que**, lesdites pompes étant utilisées individuellement ou en groupe, il comporte des moyens affectant chaque pompe ou groupe de pompes à au moins une tâche spécifique de lubrification, chaque pompe ou groupe de pompes étant régulé en fonction de ladite tâche spécifique, indépendamment les uns des autres.

14. Utilisation du dispositif selon l'une quelconque des revendications 1 à 13 pour la lubrification d'un moteur aéronautique, de préférence un turboréacteur.
